# EUROPEAN PATENT SPECIFICATION

(11) **EP 1 998 063 B1**
(45) Date of publication and mention of the grant of the patent: **19.03.2014**
(21) Application number: 08251697.2
(22) Date of filing: 14.05.2008
(51) Int. Cl.: F16D 43/10

(54) **Centrifugal clutch and straddle type vehicle including the centrifugal clutch**
Zentrifugalkupplung und Grätschsitzfahrzeug damit
Embrayage centrifuge et véhicule de type à enfourcher l'incluant

(30) Priority: 30.05.2007 JP 2007143218
(43) Date of publication of application: 03.12.2008
(73) Proprietor: Yamaha Hatsudoki Kabushiki Kaisha, Iwata-shi, Shizuoka 438-8501 (JP)
(72) Inventor: Murayama, Takuji, Iwata-shi, Shizuoka-ken 438-8501 (JP); Ooi, Kazunori, Iwata-shi, Shizuoka-ken 438-8501 (JP)
(74) Representative: Grünecker, Kinkeldey, Stockmair & Schwanhäusser

(56) References cited:
- JP-A- S6 124 834
- US-A- 834 499
- US-A- 2 496 201
- US-A- 3 006 449
- US-A1- 2004 262 115
- US-A1- 2006 090 944

## Description

The present invention relates to a centrifugal clutch according to the preamble of independent claim 1 and a straddle type vehicle including the centrifugal clutch. Such a centrifugal clutch can be taken from the prior art documents JP 61-024834 A or US 2006/0090944 A1.

Conventionally, a centrifugal clutch in which outer plates and inner plates are press-fitted together with use of roller weights moved by centrifugal force is used in straddle type vehicles such as motorcycles and four-wheeled buggies (for example, see JP-A-2007-38736).

This type of centrifugal clutch includes a clutch housing rotating with an input shaft and a clutch boss disposed inside the clutch housing. Outer plates are mounted on the clutch housing. Inner plates facing the outer plates are mounted on the clutch boss. Roller weights are mounted between the clutch housing and the outer plates. Cam surfaces for guiding the roller weights are formed on the clutch housing. When the roller weights receive centrifugal force and move outward in a radial direction of the input shaft, the roller weights are guided by the cam surfaces in directions such that the outer plates and the inner plates are press-fitted together.

In a straddle type vehicle, it is not preferable that a vehicle width be excessively large since a rider has difficulty in straddling the vehicle. However, in the case that an engine with a large displacement is used, for example, an entire engine unit becomes large since a large-sized centrifugal clutch, and so forth, have to be used. Therefore, there is a problem that the vehicle width becomes accordingly large.

It is an object of the present invention to provide centrifugal clutch as indicated above with a reduced size. Moreover, it also aims to reduce the vehicle width of the straddle type vehicle including the centrifugal clutch.

According to the present invention said object is solved by a centrifugal clutch having the features of independent claim 1. Preferred embodiments are laid down in the dependent claims.

Accordingly, it is provided a centrifugal clutch to be engaged and disengaged when a straddle type vehicle starts and stops traveling, including: a clutch housing which rotates together with an input shaft which rotates when receiving a torque from a drive source; a clutch boss disposed inside the clutch housing with respect to a radial direction of the input shaft; an outer plate mounted on the clutch housing so as to be slidable with respect to an axial direction of the input shaft; an inner plate mounted on the clutch boss so as to be slidable with respect to the axial direction of the input shaft and facing the outer plate; and a roller weight provided between the clutch housing and the outer plate, in which a first cam surface is formed on the clutch housing, the first cam surface being configured to guide the roller weight in a direction such that the outer plate and the inner plate are press-fitted together when the roller weight receives centrifugal force and moves outward in the radial direction of the input shaft, and a second cam surface is formed at least at an inner end of the outer plate in the radial direction, the second cam surface being configured to guide the roller weight outward in the radial direction of the input shaft and toward the first cam surface with respect to the axial direction of the input shaft when the roller weight receives centrifugal force and moves.

A second cam surface is formed on the outer plate, and the second cam surface is configured to guide the roller weight outward in the radial direction of the input shaft and toward the first cam surface with respect to the axial direction of the input shaft when the roller weight receives centrifugal force and moves. In the conventional centrifugal clutch, when the roller weight is positioned most inward in the radial direction, the roller weight projects out most toward the first cam surface. However, in the above centrifugal clutch, when the roller weight is positioned most inward in the radial direction of the input shaft, the second cam surface reduces the projection of the roller weight toward the first cam surface. Thereby, a width of the centrifugal clutch (a size in the axial direction of the input shaft) can be reduced at a part that the width becomes largest. Therefore, a size of the centrifugal clutch can be reduced. Also, a size of the above centrifugal clutch can be reduced, or increase in a size of the centrifugal clutch can be reduced, even if a clutch capacity is increased.

The present invention provides a straddle type vehicle including the centrifugal clutch.

With the above straddle type vehicle, a size of the centrifugal clutch can be reduced, and thus the vehicle width of the straddle type vehicle can be reduced. Therefore, the vehicle width of the above straddle type vehicle can be reduced by reducing a size of the centrifugal clutch, and the vehicle width can be reduced by reducing the size of the centrifugal clutch, even if a clutch capacity is increased.

As described in the foregoing, with the present invention, a size of the centrifugal clutch can be reduced, and the vehicle width of the straddle type vehicle including the centrifugal clutch can be reduced.

### Brief Description of Drawings

Embodiments of the invention are described by way of example only, with reference to the accompanying drawings.
FIG. 1 is a side view of a straddle type vehicle according to an embodiment.
FIG. 2 is a cross-sectional view of the straddle type vehicle according to the embodiment.
FIG. 3 is a partial enlarged view of FIG. 2.
FIG. 4 is an enlarged view showing a part of a centrifugal clutch.
FIG. 5 is an enlarged view showing a cam surface.
FIG. 6 shows characteristic curves indicating the relationship between the position of a roller weight in a radial direction and the engine speed.

### Detailed Description

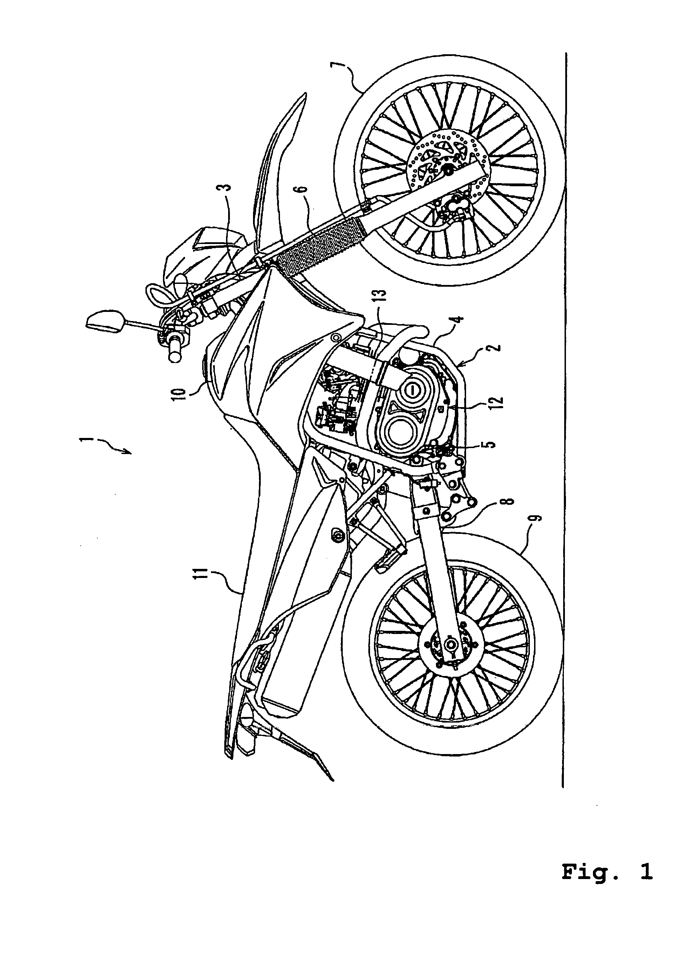

A motorcycle 1 according to an embodiment will be described in detail hereinafter. In this embodiment, descriptions will be made about the off-road type motorcycle 1 shown in FIG. 1 as an example of a straddle type vehicle embodying the present invention. However, the straddle type vehicle according to the present invention is not limited to the off-road type motorcycle, but may be, for example, motorcycles other than off-road type (motorcycles of on-road type, scooter type, so-called moped type, and so forth). Further, the vehicle may be a straddle type vehicle other than motorcycles (for example, an ATV (All Terrain Vehicle)).

FIG. 1 is a side view of the motorcycle 1 according to this embodiment. First, a general construction of the motorcycle 1 will be described with reference to FIG. 1. In the following description, the fore-and-aft, and the right-and-left directions are the directions as seen from a rider seated on a seat 11.

The motorcycle 1 includes a vehicle body frame 2. The vehicle body frame 2 includes a head pipe 3, a down tube 4, and a seat pillar 5. The down tube 4 extends downward from the head pipe 3. The seat pillar 5 extends rearward from the head pipe 3. A lower end of the head pipe 3 is connected to a front wheel 7 via a front fork 6, and so forth. A rear arm 8 extending rearward is pivotally supported in a vicinity of a lower end of the seat pillar 5. A rear end of the rear arm 8 is connected to a rear wheel 9. A cover 10 for covering the vehicle body frame 2 is disposed above the vehicle body frame 2. The seat 11 is provided slightly in the rear of a center of the cover 10.

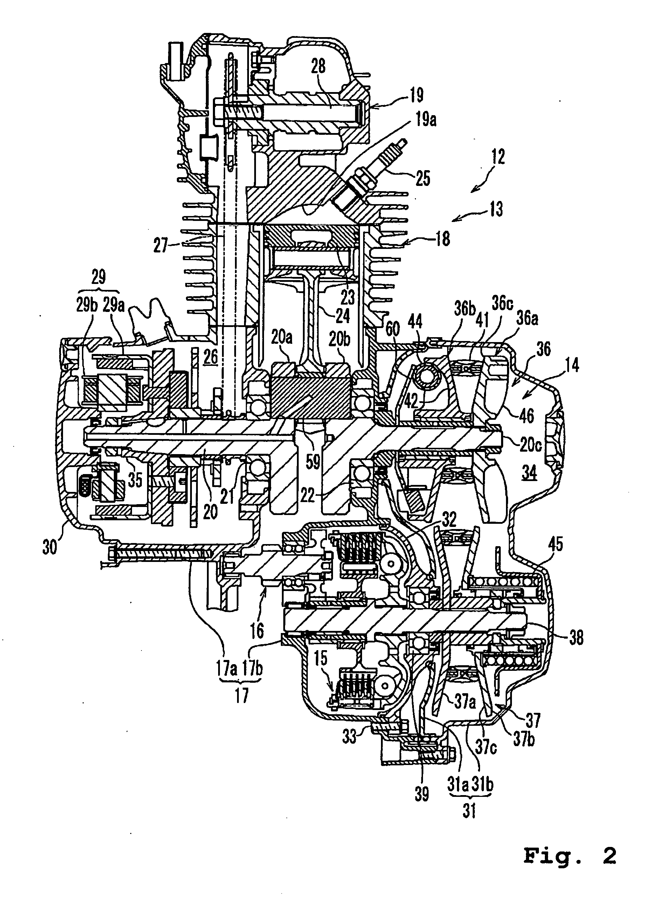

An engine unit 12 supported by the down tube 4 and the seat pillar 5 is disposed between the down tube 4 and the seat pillar 5. As shown in FIG. 2, an engine 13, a belt type continuously variable transmission (referred to as "CVT" hereinafter) 14 (see FIG. 2), a centrifugal clutch 15, a deceleration mechanism 16, and so forth are assembled into the engine unit 12. Driving force generated in the engine unit 12 is transmitted to the rear wheel 9 via power transmitting means (not shown) such as a chain belt. Here, the engine 13 will be described as a four-cycle single cylinder engine. However, the engine 13 may be a two-cycle engine. Also, the engine 13 may be a multi-cylinder engine.

Next, a construction of the engine unit 12 will be described with reference to FIG. 2. The engine unit 12 includes the engine 13, the CVT 14, the centrifugal clutch 15, and the deceleration mechanism 16. For the convenience of description, a construction of the deceleration mechanism 16 is partially omitted in FIG. 2.

The engine 13 includes a crankcase 17, a generally cylindrically shaped cylinder 18, and a cylinder head 19. The crankcase 17 is constructed with two case blocks which are a first case block 17a positioned on the left and a second case block 17b positioned on the right. The first case block 17a and the second case block 17b are disposed to face each other in the vehicle width direction. The cylinder 18 is connected to a part in front of and obliquely above the crankcase 17 (see also FIG. 1). A cylinder head 19 is connected to a top end of the cylinder 18.

A crankshaft 20 horizontally extending in the vehicle width direction is housed in the crankcase 17. The crankshaft 20 is supported by the first case block 17a and the second case block 17b via bearings 21 and 22.

A piston 23 is slidably inserted into the cylinder 18. One end of a connecting rod 24 is connected to a part of the piston 23 close to the crankshaft 20. The other end of the connecting rod 24 is coupled with a crank pin 59 disposed between a left crank arm 20a and a right crank arm 20b of the crankshaft 20. Thereby, the piston 23 reciprocally moves in the cylinder 18 together with rotation of the crankshaft 20.

A concaved part 19a connected to an inner space of the cylinder 18 and an intake port and exhaust port (not shown) communicatively connected to the concaved part 19a are formed in the cylinder head 19. An ignition plug 25 is inserted and fixed into the cylinder head 19 in a manner such that an ignition part at a tip thereof is exposed in the concaved part 19a.

A cam chain chamber 26 for connecting an inner part of the crankcase 17 and an inner part of the cylinder head 19 is formed on a left part in the cylinder 18. A timing chain 27 is disposed inside the cam chain chamber 26. The timing chain 27 is wound around the crankshaft 20 and a camshaft 28. Thereby, the camshaft 28 rotates together with rotation of the crankshaft 20, and an intake valve and an exhaust valve (not shown) are opened and closed.

A generator casing 30 for housing a generator 29 is removably mounted on a left side of a front half part of the first case block 17a. Meanwhile, a transmission casing 31 for housing the CVT 14 is mounted on a right side of the second case block 17b.

An opening is formed in a right side of a rear half part of the second case block 17b. The opening is blocked by a clutch cover 32. The clutch cover 32 is removably fixed to the second case block 17b by a bolt 33.

The transmission casing 31 is formed independently of the crankcase 17. The transmission casing 31 is constructed with an inner casing 31a for covering a part of the CVT 14 positioned inside (left side) in the vehicle width direction and an outer casing 31b for covering a part of the CVT 14 positioned outside (right side) in the vehicle width direction. The inner casing 31a is mounted on the right of the crankcase 17. Meanwhile, the outer casing 31b is mounted on the right of the inner casing 31a. A belt chamber 34 is defined by the outer casing 31b and the inner casing 31a.

A left end of the crankshaft 20 passes through the first case block 17a and reaches an inside of the generator casing 30. The generator 29 is mounted at a left end of the crankshaft 20. Specifically, the generator 29 includes a rotor 29a and a stator 29b disposed to face the rotor 29a. The rotor 29a is fixed to a sleeve 35, which rotates together with the crankshaft 20, so as not to be rotatable relative to the sleeve 35. Meanwhile, the stator 29b is fixed to the generator casing 30 so as not to be rotatable or displaceable relative to the generator casing 30. Thereby, the rotor 29a rotates relative to the stator 29b together with rotation of the crankshaft 20, and electric power is generated.

The CVT 14 is housed in the belt chamber 34. The CVT 14 includes a primary sheave 36, and a secondary sheave 37 disposed in the rear of the primary sheave 36. The crankshaft 20 passes through the second case block 17b and the inner casing 31a and extends to the belt chamber 34. A right part of the crankshaft 20 (strictly, a part on the right of the bearing 22) constructs a primary sheave shaft 20c. Further, the primary sheave 36 is supported by the primary sheave shaft 20c. Thereby, the primary sheave 36 rotates together with rotation of the crankshaft 20.

On the other hand, a secondary sheave shaft 38 passing through the inner casing 31a and the clutch cover 32 and extending into the crankcase 17 is disposed in a rear half part of the transmission casing 31. The secondary sheave shaft 38 is mounted on the clutch cover 32 via a bearing 39. The secondary sheave shaft 38 is mounted on the second case block 17b via a bearing 40. The secondary sheave 37 is supported by the secondary sheave shaft 38 in the belt chamber 34.

A V-belt (for example, a resin block V-belt) 41 is wound around the secondary sheave 37 and the primary sheave 36. Therefore, when the primary sheave 36 rotates together with the crankshaft 20, a torque of the rotation is transmitted to the secondary sheave 37 via the V-belt 41, and thereby the secondary sheave shaft 38 rotates together with the secondary sheave 37. Rotation of the secondary sheave shaft 38 is transmitted to the rear wheel 9 (see FIG. 1) via the centrifugal clutch 15 described in detail later, the deceleration mechanism 16, and the power transmitting means (not shown) such as a belt or a chain.

The construction of the CVT 14 will be more specifically described. The primary sheave 36 includes a fixed sheave half 36a and a movable sheave half 36b that are taper-shaped. The fixed sheave half 36a is fixed to a right end of the primary sheave shaft 20c in a manner such that it approaches to the outer side in the vehicle width direction (to the right side) toward its outer side in the radial direction. The fixed sheave half 36a rotates together with the primary sheave shaft 20c. Meanwhile, the movable sheave half 36b is disposed in a part closer to a center than (on the left side of) the fixed sheave 36a in a manner such that it approaches to the inner side in the vehicle width direction (to the left side) toward its outer side in the radial direction. The movable sheave half 36b is mounted on the primary sheave shaft 20c so as to be slidable in the axial direction but not rotatable relative to the primary sheave shaft 20c.

A belt groove 36c of which a cross section is generally a V-shape is formed by the fixed sheave half 36a and the movable sheave half 36b. A V-belt 41 is wound around the belt groove 36c. The movable sheave half 36b displaces relative to the fixed sheave half 36a, and thereby a width of the belt groove 36c is variable.

A fan 46 for cooling is provided on an outer surface (the right side surface in FIG. 2) of the fixed sheave half 36a. A plurality of cam surfaces 42 extending in the radial direction are formed on a left side surface of the movable sheave half 36b. A cam plate 60 is disposed to face the cam surfaces 42 on the left of the movable sheave half 36b. A plurality of generally cylindrically shaped (or generally column-shaped) roller weights 44 which are not displaceable in the rotational direction but are displaceable in the radial direction are disposed in a space defined between the cam plate 60 and the cam surfaces 42. The cam surfaces 42 are formed in a tapered shape in a manner such that they approach the cam plate 60 from their center toward their outer side in the radial direction. Meanwhile, the cam plate 60 is also formed in a tapered shape in a manner such that it approaches the cam surfaces 42 from its center toward its outer side in the radial direction. That is, widths between the cam plate 60 and the cam surfaces 42 become narrower toward the outer side in the radial direction.

The secondary sheave 37 includes a fixed sheave half 37a and a movable sheave half 37b positioned more outward than the fixed sheave half 37a in the vehicle width direction and disposed to face the fixed sheave half 37a. The fixed sheave half 37a is fixed to the secondary sheave shaft 38 in a manner such that it approaches to the inner side in the vehicle width direction (to the left side) toward its outer side in the radial direction, and rotates together with the secondary sheave shaft 38. Meanwhile, the movable sheave half 37b is fixed to the secondary sheave shaft 38 in a manner such that it approaches to the outer side in the vehicle width direction (to the right side) toward its outer side in the radial direction. The movable sheave half 37b is mounted on the secondary sheave shaft 38 so as to be slidable in the axial direction but not rotatable relative to the secondary sheave shaft 38.

The fixed sheave half 37a and the movable sheave half 37b form a belt groove 37c of which a cross section is generally a V-shape and around which the V-belt 41 is wound. The movable sheave half 37b displaces relative to the fixed sheave half 37a, and thereby a width of the belt groove 37c is variable. An axial part of the movable sheave half 37b is formed into a cylindrical slide collar, and spline-fitted to the secondary sheave shaft 38.

A compression coil spring 45 is disposed outside of the movable sheave half 37b in the vehicle width direction (on the right side). The movable sheave half 37b is urged toward the fixed sheave half 37a by the compression coil spring 45. Thereby, the width of the belt groove 37c becomes smallest in a state that an engine speed is low, for example, in an idling state.

In the CVT 14, a transmission ratio is determined depending on a ratio between a force that the roller weights 44 press the movable sheave half 36b toward the fixed sheave half 36a (toward the right side) and a force that the compression coil spring 45 urges the movable sheave half 37b toward the fixed sheave half 37a (toward the left side).

Describing more specifically, when a rotational speed of the primary sheave shaft 20c is low, the width of the belt groove 37c of the secondary sheave 37 is narrowed due to an urging force of the compression coil spring 45 (see the state of the secondary sheave 37 drawn in the part above the secondary sheave shaft 38 in FIG. 2 (maximum transmission ratio position)). Therefore, a radius of the belt wound around the secondary sheave 37 becomes large, and thereby the V-belt 41 is drawn toward the secondary sheave 37. Thereby, the movable sheave half 36b is pressed toward the cam plate 60 by the V-belt 41, and the width of the belt groove 36c of the primary sheave 36 is increased (see the state of the primary sheave 36 drawn in the part below the primary sheave shaft 20c in FIG. 2 (maximum transmission ratio position)). As a result, the transmission ratio becomes large.

On the other hand, when a rotational speed of the primary sheave shaft 20c rises, the roller weights 44 receive centrifugal force and move outward in the radial direction. Since the distance between the movable sheave half 36b and the cam plate 60 decreases toward the outer side in the radial direction, the movable sheave half 36b is pressed toward the fixed sheave half 36a (to the right side) as the roller weights 44 move outward in the radial direction. Then, the movable sheave half 36b slides toward the fixed sheave half 36a, and the belt groove 36c is narrowed (see the state of the primary sheave 36 drawn in the part above the primary sheave shaft 20c in FIG. 2). Thereby, a radius of the belt wound around the primary sheave 36 becomes large. Accompanying this, the V-belt 41 is drawn toward the primary sheave 36. The V-belt 41 presses the movable sheave half 37b in a direction away from the fixed sheave half 37a (to the right side) against the urging force of the compression coil spring 45. Thereby, the movable sheave half 37b slides in the direction away from the fixed sheave half 37a, and the radius of the belt around the secondary sheave 37 becomes small (see the state of the secondary sheave 37 drawn in the part below the secondary sheave shaft 38 in FIG. 2). As a result, the transmission ratio becomes small.

The roller weights 44 move inward and outward in the radial direction, and thereby the distances between the cam surfaces 42 and the cam plate 60 are changed. Therefore, the roller weights 44 may be replaced by any component which can move inward and outward in the radial direction. For example, the component may be in a spherical shape, a short cylindrical shape, and so forth. The component may move by rotation or by sliding.

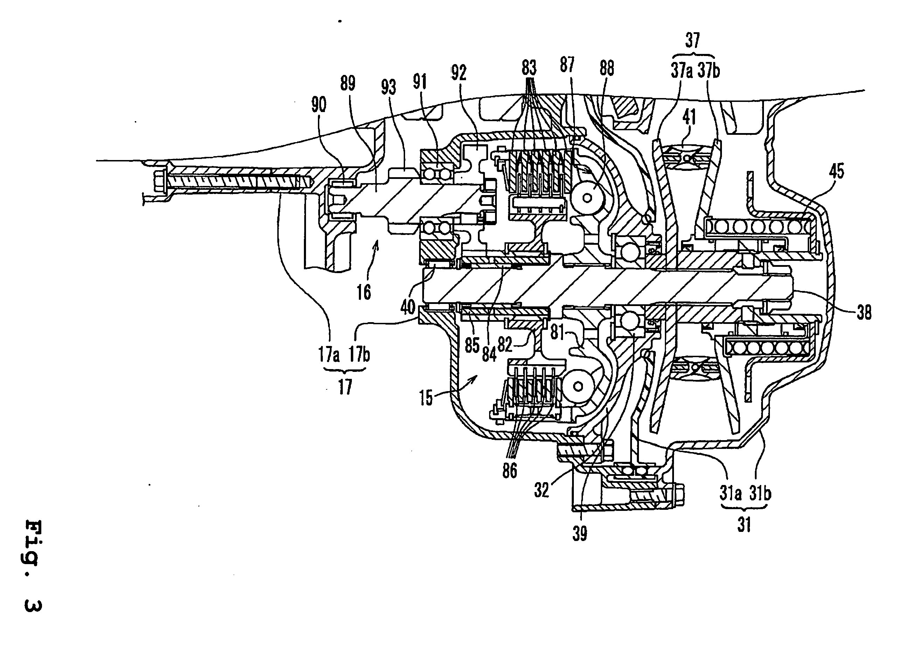

FIG. 3 is an enlarged view showing a vicinity of the centrifugal clutch 15 and the deceleration mechanism 16 in FIG. 2. As shown in FIG. 3, the centrifugal clutch 15 is mounted on a left part of the secondary sheave shaft 38. The centrifugal clutch 15 is a wet type multiple disc clutch, and includes a generally cylindrically shaped clutch housing 81 and a clutch boss 82. The clutch housing 81 is spline-fitted to the secondary sheave shaft 38, and rotates together with the secondary sheave shaft 38. A plurality of ring-shaped outer plates 83 are mounted on the clutch housing 81. The outer plates 83 are disposed at intervals so as to be slidable in the axial direction of the secondary sheave shaft 38.

A cylindrically shaped gear 85 is rotatably fitted around the left part of the secondary sheave shaft 38 via a bearing 84. The clutch boss 82 is disposed inside the outer plates 83 in the radial direction and outside the gear 85 in the radial direction, and engages with the gear 85. Therefore, the gear 85 rotates together with the clutch boss 82. A plurality of ring-shaped inner plates 86 are mounted outside the clutch boss 82 in the radial direction. The inner plates 86 are disposed at intervals so as to be slidable in the axial direction of the secondary sheave shaft 38. Each of the inner plates 86 is disposed between adjacent outer plates 83, 83. The inner plates 86 face the respective outer plates 83.

A plurality of cam surfaces 87 are formed on the left of the clutch housing 81. A plurality of generally cylindrically shaped (or generally column-shaped) roller weights 88 are disposed in a space defined between the plurality of cam surfaces 87 and the rightmost outer plate 83 facing the cam surfaces 87. The plurality of roller weights 88 are displaceable in the radial direction but not displaceable in the rotational direction.

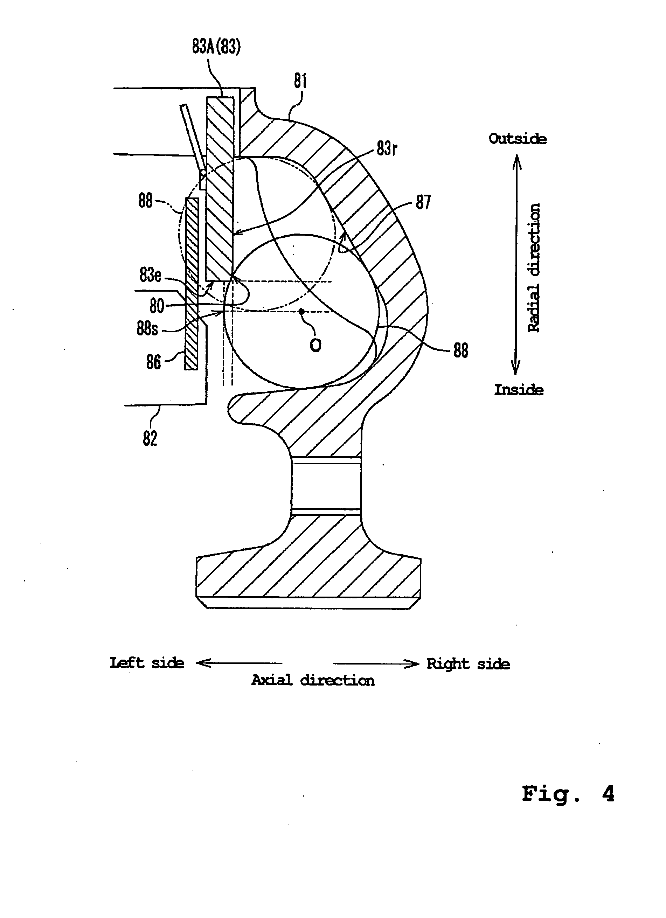

FIG. 4 is an enlarged view showing a vicinity of the roller weight 88 in FIG. 3. As shown in FIG. 4, the cam surfaces 87 are formed to guide the roller weights 88 in a direction such that the outer plates 83 and the inner plates 86 are press-fitted together when the roller weights 88 receive centrifugal force and move outward in the radial direction. Specifically, in this embodiment, the cam surfaces 87 are formed to approach the rightmost outer plate 83 (referred to as "outer plate 83A" hereinafter for the convenience of description with reference to FIG. 4) toward the outer side in the radial direction.

In this embodiment, the cam surfaces 87 are formed slightly longer than the conventional cam surfaces. Specifically, as shown in FIG. 4, the cam surfaces 87 are formed in a manner such that centers O of the roller weights 88 are positioned more inward in the radial direction than inner ends 83e of the outer plates 83 when the roller weights 88 are positioned most inward with respect to the radial direction. Therefore, when the roller weights 88 are positioned most inward with respect to the radial direction, left ends 88s of the roller weights 88 are positioned more left than a right end (right side surface) 83r of the outer plate 83A with respect to the axial direction of the secondary sheave shaft 38.

Meanwhile, a cam surface 80 is formed on the rightmost outer plate 83A. The cam surface 80 is formed at an inner end in the radial direction of the right end (right side surface) 83r of the outer plate 83A. The cam surface 80 is formed to approach the cam surfaces 87 with respect to the axial direction of the secondary sheave shaft 38 toward the outer side in the radial direction. Thereby, when the roller weights 88 receive centrifugal force and move, the cam surface 80 guides the roller weights 88 outward in the radial direction and toward the cam surfaces 87 with respect to the axial direction of the secondary sheave shaft 38.

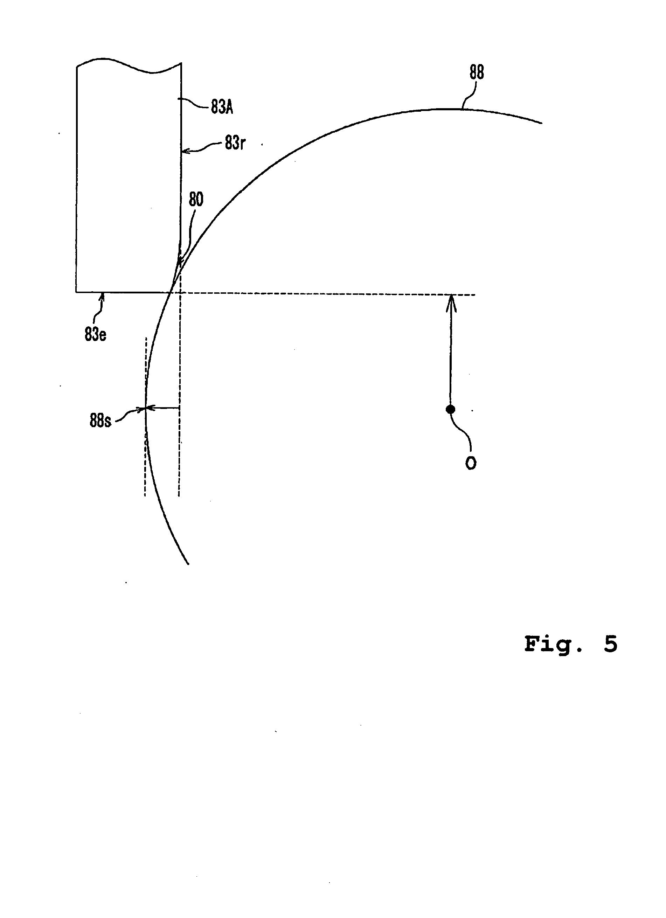

For such a cam surface 80, the outer plate 83A is formed into a shape such that a corner of a plate body of which a cross section taken in the radial direction of the secondary sheave shaft 38 is generally rectangular is chamfered. The chamfered part is the cam surface 80. As shown in FIG. 5 as enlarged, in this embodiment, the cam surface 80 is formed with a convex curved surface.

With such a construction, the roller weights 88 receive centrifugal force and move inward or outward with respect to the radial direction of the secondary sheave shaft 38, and thereby the distance between the cam surfaces 87 and the outer plate 83A changes. The roller weights 88 may be replaced by any component which can move inward and outward with respect to the radial direction of the secondary sheave shaft 38. For example, the component may be in a spherical shape, a short cylindrical shape, and so forth. Further, the component may move by rotation or by sliding.

As shown in FIG. 3, the deceleration mechanism 16 is interposed between the centrifugal clutch 15 and an output shaft (not shown). The deceleration mechanism 16 has a speed change shaft 89 disposed in parallel with the secondary sheave shaft 38. The speed change shaft 89 is rotatably supported by the first case block 17a via a bearing 90. The speed change shaft 89 is rotatably supported by the second case block 17b via a bearing 91. A first speed change gear 92 engaging with the gear 85 is provided at a right end of the speed change shaft 89.

A second speed change gear 93 with a diameter smaller than the first speed change gear 92 is provided in a center part of the speed change shaft 89. The second speed change gear 93 is disposed to engage with the output shaft (not shown) or a gear (not shown) provided on the output shaft.

In such a construction, the clutch boss 82 and the output shaft are coupled together via the gear 85, the first speed change gear 92, the speed change shaft 89, the second speed change gear 93, and so forth. Therefore, the output shaft rotates along with rotation of the clutch boss 82. Although not shown, the power transmitting mechanism for transmitting driving force of the output shaft to the rear wheel 9 (see FIG. 1) such as a chain is wound around the output shaft. A drive converting mechanism may be a member other than a chain such as a transmission belt, a gear mechanism assembled from a plurality of gears, and a drive shaft.

The foregoing has described the construction of the engine unit 12. Next, operation of the centrifugal clutch 15 will be described.

In the centrifugal clutch 15, a clutch-in state (engaged state) and a clutch-off state (disengaged state) are automatically switched according to a magnitude of centrifugal force applied to the roller weights 88. In FIG. 3, the part below the secondary sheave shaft 38 shows the clutch-in state, and the part above it shows the clutch-out state. In FIG. 4, the roller weight 88 in the clutch-in state is expressed with a chain double-dashed line, and the roller weight 88 in the clutch-out state is expressed with a solid line.

First, a description will be given about an operation that the clutch-out state is switched into the clutch-in state. In the case that a rotational speed of the clutch housing 81 is less than a prescribed speed, the roller weights 88 are held between the outer plate 83A and the clutch housing 81, and positioned most inward with respect to the radial direction of the secondary sheave shaft 38. At this point, the outer plates 83 and the inner plates 86 do not receive pressing force from the roller weights 88, and are not press-fitted together. Therefore, the centrifugal clutch 15 remains in the clutch-off state. However, if the rotational speed of the clutch housing 81 increases and becomes a prescribed speed or more, the roller weights 88 receive centrifugal force and start moving outward in the radial direction.

Now, the roller weights 88 move along the cam surfaces 87 formed on the clutch housing 81. Specifically, the cam surfaces 87 guide the roller weights 88 toward the left (toward the cam surface 80) with respect to the axial direction of the secondary sheave shaft 38 as the roller weights 88 move outward in the radial direction. Thereby, the outer plate 83A is pressed toward the left by the roller weights 88. As a result, the outer plates 83 and the inner plates 86 are press-fitted together, and the centrifugal clutch 15 becomes the clutch-in state that a torque of the secondary sheave shaft 38 is transmitted to the output shaft (not shown) via the centrifugal clutch 15.

As described above, the cam surfaces 87 are formed slightly longer than the conventional cam surfaces. Thereby, when the roller weights 88 are positioned most inward with respect to the radial direction of the secondary sheave shaft 38, the left ends 88s of the roller weights 88 are positioned more left than the right end 83r of the outer plate 83A with respect to the axial direction of the secondary sheave shaft 38 (see FIGs. 4 and 5). Therefore, if an outer plate 83A on which the cam surface 80 is not formed and of which a cross section taken in the radial direction of the secondary sheave shaft 39 is generally rectangular as in the conventional centrifugal clutch were used, the roller weights 88 might be caught on a corner of the outer plate 83A in moving outward in the radial direction of the secondary sheave shaft 39.

However, the outer plate 83A according to this embodiment has the cam surface 80 formed in a manner such that the corner of the outer plate 83A is chamfered. Therefore, the cam surface 80 smoothly guides the roller weights 88 outward in the radial direction and toward the right (toward the cam surfaces 87) along the axial direction of the secondary sheave shaft 38.

Next, a description will be given about an operation that the clutch-in state is switched into the clutch-out state. When the rotational speed of the clutch housing 81 decreases and becomes less than a prescribed speed, centrifugal force acting on the roller weights 88 becomes small. Thereby, the roller weights 88 move inward in the radial direction of the secondary sheave shaft 38. As a result, the outer plates 83 and the inner plates 86 press-fitted together are released from each other. Thereby, the centrifugal clutch 15 becomes the clutch-off state that a torque of the secondary sheave shaft 38 is not transmitted to the output shaft.

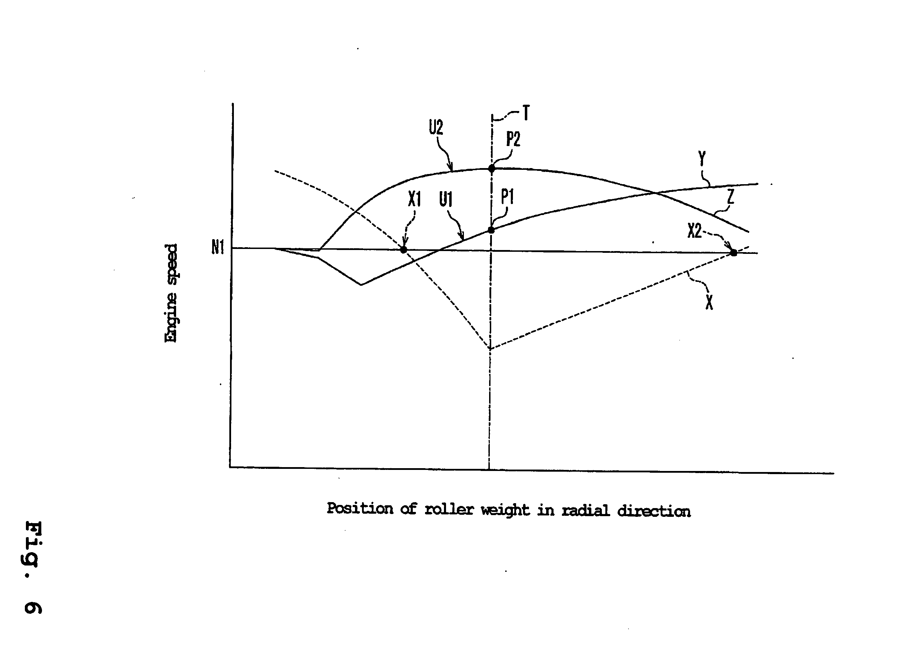

The foregoing has described the operation of the centrifugal clutch 15. Next, a description will be given about the characteristic curves indicated in a correlation graph as shown in FIG. 6 in which the horizontal axis represents the position of the roller weight 88 and the vertical axis represents the engine speed. Here, the position of the roller weight 88 means the position of the center O of the roller weight 88 with respect to the radial direction of the secondary sheave shaft 38 given that the axis of the secondary sheave shaft 38 is zero.

Characteristic curve X indicates a case that the cam surface 80 is not provided on the outer plate 83A. Characteristic curves Y and Z each indicate a case that the cam surface 80 is provided. Straight line T extending in parallel with the vertical axis in FIG. 6 indicates a state that the centers O of the roller weights 88 are in the position of the inner ends 83e of the outer plates 83 in the radial direction (the position of the inner end 83e of the outer plate 83 with respect to the radial direction of the secondary sheave shaft 38 given that the axis of the secondary sheave shaft 38 is zero) .

In the conventional centrifugal clutch, the cam surfaces 87 formed on the clutch housing 81 are formed in a manner such that positions of the centers O of the roller weights 88 are generally equal to positions of the inner ends 83e of the outer plates 83 in the radial direction with respect to the radial direction of the secondary sheave shaft 38 when the roller weights 88 are positioned most inward with respect to the radial direction of the secondary sheave shaft 38. Therefore, conventionally, characteristic curves exist only in the right side area of straight line T, and the curves stably move upward toward the right.

However, in the centrifugal clutch in which the cam surfaces 87 are formed longer than the conventional cam surfaces as in the centrifugal clutch 15 according to this embodiment, the centers O of the roller weights 88 are positioned more inward in the radial direction than the inner ends 83e of the outer plates 83 when the roller weights 88 are positioned most inward with respect to the radial direction of the secondary sheave shaft 38. Thereby, characteristic curves exist also in the left side area of straight line T in the centrifugal clutch in which the cam surfaces 87 are formed longer as in the centrifugal clutch 15 (see characteristic curves X, Y, and Z).

There is a fall on characteristic curve X at its intersection with straight line T. This means that movements of the roller weights 88 become unstable. Specifically, although the engine speed rises, the roller weights 88 are caught on the corner of the outer plate 83A, and do not smoothly start moving. When the engine speed further rises, the roller weights 88 climb over the corner of the outer plate 83A, and rapidly move outward in the radial direction. For example, the roller weights 88 rapidly move from point X1 on characteristic curve X to point X2 on characteristic curve X at which the engine speed is equal to engine speed N1 at point X1. Due to this, the roller weights 88 do not gradually press-fit the outer plates 83 and the inner plates 86 together according to increase in the engine speed, but rapidly press-fit them together. Therefore, the centrifugal clutch having characteristics indicated by characteristic curve X provides an non-preferred clutch feeling.

Differently from characteristic curve X, there are no large falls at intersections of characteristic curves Y and Z with straight line T. Characteristic curves Y and Z have parts U1 and U2 moving upward toward the right which intersect with straight line T. In other words, characteristic curves Y and Z have characteristics that they have respective parts U1 and U2 moving upward toward the right which extend across points P1 and P2 at which positions of the centers O of the roller weights 88 are equal to a position of the inner end 83e of the outer plate 83A. Thereby, movements of the roller weights 88 are stabilized. Specifically, in the centrifugal clutch 15 having such characteristics, the roller weights 88 gradually move outward in the radial direction along with a rise in the engine speed. Thereby, the roller weights 88 smoothly move in parts (around P1 or P2) that positions of the centers O in the radial direction are generally equal to positions of the inner ends 83e of the outer plates 83 in the radial direction. Thereby, the outer plates 83 and the inner plates 86 are gradually press-fitted together. Therefore, the centrifugal clutch 15 according to this embodiment having characteristics indicated by characteristic curves Y and Z provides preferable clutch feeling compared to the centrifugal clutch having characteristics indicated by characteristic curve X.

As has been described in the foregoing, the outer plate 83A of the centrifugal clutch 15 according to this embodiment has the cam surface 80 formed to guide the roller weights 88 outward in the radial direction and toward the cam surfaces 87 with respect to the axial direction of the secondary sheave shaft 38 when the roller weights 88 receive centrifugal force and move. In the conventional centrifugal clutch, the roller weights 88 project out most toward the cam surfaces 87 when the roller weights 88 are positioned most inward in the radial direction of the secondary sheave shaft 38. However, in the centrifugal clutch 15, the cam surface 80 reduces the projection of the roller weights 88 toward the cam surfaces 87 when the roller weights 88 are positioned most inward with respect to the radial direction of the secondary sheave shaft 38. Thereby, the width of the centrifugal clutch 15 (its size with respect to the axial direction of the secondary sheave shaft 38) can be reduced at the part that its width is largest. Therefore, a size of the centrifugal clutch 15 can be reduced. With the centrifugal clutch 15, the size of the centrifugal clutch 15 can be reduced, or increase in a size of the centrifugal clutch 15 can be prevented, even if a clutch capacity is increased.

In increasing the clutch capacity, numbers of the outer plates 83 and the inner plates 86 may be increased. In such a case, it is required to increase stroke amounts of the roller weights 88 with respect to the axial direction of the secondary sheave shaft 38. Therefore, the clutch housing 81 may be made larger to ensure the stroke amounts. However, if the clutch housing 81 is made larger, the centrifugal clutch 15 becomes larger, and this results in an increase in the vehicle width of the motorcycle 1 which is the straddle type vehicle. Thus, it is not preferable.

Therefore, the present inventors modified a shape of the clutch housing 81 and elongated the cam surfaces 87 inward in the radial direction without increasing the size of the clutch housing 81. Thereby, when the roller weights 88 are positioned most inward with respect to the radial direction of the secondary sheave shaft 38, the centers O of the roller weights 88 are positioned more inward in the radial direction than the inner ends 83e of the outer plates 83. As described above, even in the case where the numbers of the outer plates 83 and the inner plates 86 are increased to increase the clutch capacity, the cam surface 80 is formed on the outer plate 83A, and thereby the size of the centrifugal clutch 15 can be reduced.

However, in the centrifugal clutch in which the centers O of the roller weights 88 are positioned more inward in the radial direction than the inner ends 83e of the outer plates 83 when the roller weights 88 are positioned most inward in the radial direction as described above, the roller weights 88 may be caught on the corner of the outer plate 83A when the roller weights 88 move outward in the radial direction of the secondary sheave shaft 38. Therefore, the roller weights 88 may not gradually move according to magnitude of centrifugal force, but may suddenly climb over the corner of the outer plate 83A and rapidly move when the roller weights 88 have obtained a certain amount of centrifugal force. As a result, the clutch feeling may be deteriorated.

However, the cam surface 80 is formed on the outer plate 83A of the centrifugal clutch 15. Therefore, the cam surface 80 prevents a situation that the roller weights 88 are caught on the outer plate 83A and their movements are interrupted. Thereby, the roller weights 88 can smoothly move. Accordingly, the centrifugal clutch 15 can prevent deterioration in clutch feeling even if the cam surface 87 is elongated in the radial direction.

If the cam surfaces 87 are elongated as described above, the left ends of the roller weights 88 are positioned more left than the right end of the outer plate 83A when the roller weights 88 are positioned most inward in the radial direction. Therefore, the width of the centrifugal clutch 15 can be reduced at the part that its width is largest since the roller weights 88 project out farthest. Thereby, even if the clutch capacity of the centrifugal clutch 15 is increased, an increase in a size of the centrifugal clutch 15 can be reduced, or the overall width of the centrifugal clutch 15 can be reduced.

The cam surface 80 of the centrifugal clutch 15 is formed into a shape such that the corner of the outer plate 83A of which a cross section taken in the radial direction of the secondary sheave shaft 38 is generally rectangular is chamfered. Thereby, the cam surface 80 can be formed into a preferable shape with a simple process, and thus reduction in a size of the centrifugal clutch 15 can be realized with a simple construction.

Further, the cam surface 80 of the centrifugal clutch 15 is formed with a convex curved surface. Thereby, the roller weights 88 can be smoothly guided outward in the radial direction of the secondary sheave shaft 38. Therefore, deterioration in clutch feeling can be more certainly prevented with the centrifugal clutch 15.

The centrifugal clutch 15 has characteristics as indicated by characteristic curves Y and Z that indicate positional changes of the roller weights 88 in the radial direction according to change in the engine speed. Characteristic curves Y and Z have respective parts U1 and U2 moving upward toward the right. Parts U1 and U2 moving upward toward the right intersect with straight line T which indicates that positions of the roller weights 88 in the radial direction are equal to positions of the inner ends 83e of the outer plates 83 in the radial direction. In other words, characteristic curves Y and Z have characteristics that they have respective parts U1 and U2 moving upward toward the right which extend across points P1 and P2 at which positions of the centers 0 of the roller weights 88 are equal to a position of the inner end 83e of the outer plate 83A.

With such characteristics, the movements of the roller weights 88 are stabilized differently from characteristic curve X having a large fall at its intersection with straight line T. Therefore, the roller weights 88 are prevented from rapidly moving outward in the radial direction of the secondary sheave shaft 38. Thereby, the clutch feeling can be improved compared to the centrifugal clutch having characteristics of characteristic curve X.

The motorcycle 1 according to this embodiment includes the centrifugal clutch 15 according to the present invention. This can reduce a size of the centrifugal clutch 15, and further a size of the engine unit 12 and the vehicle width of the straddle type vehicle.

In the centrifugal clutch 15 according to this embodiment, the cam surfaces 87 formed on the clutch housing 81 are elongated so that the centers O of the roller weights 88 are positioned more inward in the radial direction than the inner end 83e of the outer plate 83A when the roller weights 88 are positioned most inward with respect to the radial direction of the secondary sheave shaft 38. However, the centrifugal clutch according to the present invention is not limited to this. The cam surfaces 87 may be formed in a manner such that the centers of the roller weights 88 are not positioned more inward than the inner end of the outer plate 83A when the roller weights 88 are positioned most inward in the radial direction as in the conventional centrifugal clutch.

Also in such a case as described above, the size of the centrifugal clutch 15 can be reduced with the cam surface 80 formed on the outer plate 83A.

The cam surface 80 of the centrifugal clutch 15 is provided at the inner end of the outer plate 83A in the radial direction. However, the cam surface 80 may be formed on a wide area including the inner end of the outer plate 83A in the radial direction (for example, an area of which a length in the radial direction is half a length of the outer plate 83A or more). In such a case, the same effect as described above can be achieved.

In the centrifugal clutch 15 according to this embodiment, the cam surface 80 is formed at the inner end of the outer plate 83A as means for preventing deterioration in clutch feeling due to the elongation of the cam surfaces 87 into lengths larger than the conventional cam surfaces. However, the means is not limited to this. Therefore, the means may be not provided with the cam surface 80 as long as the means has the characteristics indicated by a characteristic curve having part U1 or U2 that moves upward toward the right and intersects with straight line T as characteristic curve Y or Z. The means having such characteristics can stabilize the movements of the roller weights 88 and prevent deterioration in clutch feeling.

The cam surfaces 87 can form a first cam surface to guide the roller weights 88 in a direction such that the outer plates 83 and the inner plates 86 are press-fitted together when the roller weights 88 receive centrifugal force and move outward in the radial direction of the secondary sheave shaft 38.

The cam surface 80 can form a second cam surface to guide the roller weights 88 toward the cam surfaces 87 with respect to the axial direction of the secondary sheave shaft 38 when the roller weights 88 receive centrifugal force and move outward in the radial direction of the secondary sheave shaft 38.

There has been described a centrifugal clutch 15 includes a clutch housing 81 on which an outer plate 83 is mounted, and a clutch boss 82 on which an inner plate 86 is mounted. A roller weight 88 is provided between the clutch housing 81 and an outer plate 83A disposed in a rightmost position. The clutch housing 81 has a cam surface 87 formed thereon for guiding the roller weight 88 in a direction such that the outer plate 83 and the inner plate 86 are press-fitted together when the roller weight 88 moves outward in a radial direction of a secondary sheave shaft 38. The outer plate 83A has a cam surface 80 formed thereon for guiding the roller weight 88 outward in the radial direction and toward the cam surface 87 with respect to an axial direction when the roller weight 88 moves outward in the radial direction of the secondary sheave shaft 38. Such a construction can provide a centrifugal clutch of reduced size, and a reduced a vehicle width of a straddle type vehicle including the centrifugal clutch.

As described in the foregoing, the present invention is useful for a centrifugal clutch and a straddle type vehicle including the centrifugal clutch.

### Descriptions of Reference Numerals and Symbols

1: motorcycle (straddle type vehicle)
15: centrifugal clutch
38: secondary sheave shaft (input shaft)
80: cam surface (second cam surface)
81: clutch housing
82: clutch boss
83: outer plate
83A: outer plate
83e: inner end of outer plate
83r: right end of outer plate (end of outer plate on the other side)
86: inner plate
87: cam surface (first cam surface)
88: roller weight
88s: left end of roller weight (end of roller weight on one side) O: center of roller weight
U1: part moving upward toward the right
U2: part moving upward toward the right
X, Y, Z: characteristic curve

## Claims

1. A centrifugal clutch to be engaged and disengaged when a straddle type vehicle starts and stops traveling, comprising:
a clutch housing (81) which rotates together with an input shaft (38) which rotates when receiving a torque from a drive source;
a clutch boss (82) disposed inside the clutch housing (81) with respect to a radial direction of the input shaft (38);
an outer plate (83A) mounted on the clutch housing (81) so as to be slidable with respect to an axial direction of the input shaft (38);
an inner plate (86) mounted on the clutch boss (82) so as to be slidable with respect to the axial direction of the input shaft (38) and facing the outer plate (83A); and
a roller weight (88) provided between the clutch housing (81) and the outer plate (83A), wherein a first cam surface (87) is formed on the clutch housing (81), the first cam surface (87) being configured to guide the roller weight (88) in a direction such that the outer plate (83A) and the inner plate (86) are press-fitted together when the roller weight (88) receives centrifugal force and moves outward in the radial direction of the input shaft (38), **characterized by**
a characteristic curve indicated in a correlation graph of which the horizontal axis represents a position of the center (O) of the roller weight (88) relative to an axis of the input shaft (38) with respect to the radial direction of the input shaft (38) and of which the vertical axis represents an engine speed has a part moving upward toward the right which extends gradually across a point at which the position of the center (O) of the roller weight (88) is equal to a position of the inner end (83e) of the outer plate (83A).

2. A centrifugal clutch according to claim 1, **characterized by** a second cam surface (80) formed at least at an inner end (83e) of the outer plate (83A) in the radial direction, the second cam surface (80) being configured to guide the roller weight (88) outward in the radial direction of the input shaft (38) and toward the first cam surface (87) with respect to the axial direction of the input shaft (38) when the roller weight (88) receives centrifugal force and moves.

3. A centrifugal clutch according to claim 2, **characterized in that** the second cam surface (80) is formed with a convex curved surface.

4. A centrifugal clutch according to any one of claims 1 to 3, **characterized in that** the first cam surface (87) is formed in a manner such that a center (O) of the roller weight (88) is positioned more inward than the inner end (83e) of the outer plate (83A) when the roller weight (88) is positioned most inward with respect to the radial direction of the input shaft (38).

5. A centrifugal clutch according to any one of claims 1 to 4, **characterized in that** the roller weight (88) is positioned on one side of the first cam surface (87) with respect to the axial direction of the input shaft (38), and
the first cam surface (87) is formed in a manner such that an end (88s) of the roller weight (88) on the one side is positioned more on the one side than an end (83r) of the outer plate (83A) on the other side with respect to the axial direction of the input shaft (38) when the roller weight (88) is positioned most inward with respect to the radial direction of the input shaft (38).

6. A centrifugal clutch according to any one of claims 1 to 5, **characterized in that** the outer plate (83A) is formed in a shape obtained by chamfering a corner of a plate of which a cross section taken in the radial direction of the input shaft (38) is generally rectangular, and the second cam surface (80) is the chamfered part.

7. A straddle type vehicle comprising the centrifugal clutch according to any one of claims 1 to 6.

## Patentansprüche

1. Fliehkraftkupplung, um in Eingriff zu kommen oder gelöst zu werden, wenn ein Fahrzeug vom Spreizsitz- Typ das Fahren startet oder stoppt, aufweisend:
ein Kupplungsgehäuse (81), das sich gemeinsam mit einer Eingangswelle (38) dreht, die sich dreht, wenn ein Drehmoment von einer Antriebsquelle aufgenommen wird;
eine Kupplungsnabe (82), angeordnet innerhalb des Kupplungsgehäuses (81) in Bezug auf eine radiale Richtung der Eingangswelle (38);
eine äußere Platte (83A), montiert an dem Kupplungsgehäuse (81), um mit Bezug auf eine radiale Richtung der Eingangswelle (38) gleitbar zu sein;
eine innere Platte (86), montiert an der Kupplungsnabe (82), um mit Bezug auf die axiale Richtung der Eingangswelle (38) gleitbar zu sein und der äußeren Platte (83A) zugewandt; und ein Walzengewicht (88), vorgesehen zwischen dem Kupplungsgehäuse (81) und der äußeren Platte (83A), wobei eine erste Nockenoberfläche (87) an dem Kupplungsgehäuse (81) gebildet ist, die erste Nockenoberfläche (87) konfiguriert ist, das Walzengewicht (88) in eine Richtung derart zu führen, dass die äußere Platte (83A) und die innere Platte (86) gemeinsam presseingesetzt werden, wenn das Walzengewicht (88) eine Fliehkraft aufnimmt und sich in radialer Richtung der Eingangswelle (38) nach außen bewegt, **gekennzeichnet durch**
eine Kennlinie, angezeigt in einer Korrelationskurve, deren horizontale Achse eine Position der Mitte (O) des Walzengewichts (88) in Bezug auf eine Achse der Eingangswelle (38) repräsentiert und deren vertikale Achse eine Motordrehzahl repräsentiert, die einen Teil hat, der sich nach oben in Richtung nach rechts bewegt, der sich allmählich quer über eine Punkt erstreckt, an dem die Position der Mitte (O) des Walzengewichts (88) zu einer Position des inneren Endes (83e) der äußeren Platte (83A) gleich ist.

2. Fliehkraftkupplung nach Anspruch 1, **gekennzeichnet durch** eine zweite Nockenoberfläche (80), gebildet an zumindest einem inneren Ende (83e) der äußeren Platte (83A) in der radialen Richtung, die zweite Nockenoberfläche (80) konfiguriert ist, das Walzengewicht (88) nach außen in die radiale Richtung der Eingangswelle (38) und in die Richtung zu der ersten Nockenoberfläche (87) in Bezug auf die axiale Richtung der Eingangswelle (38) zu führen, wenn das Walzengewicht (88) eine Fliehkraft aufnimmt und sich bewegt.

3. Fliehkraftkupplung nach Anspruch 2, **dadurch gekennzeichnet, dass** die zweite Nockenoberfläche (80) mit einer konvex- gekrümmten Oberfläche gebildet ist.

4. Fliehkraftkupplung nach einem der Ansprüche 1 bis 3, **dadurch gekennzeichnet, dass** die erste Nockenoberfläche (87) in einer derartigen Weise gebildet ist, dass eine Mitte (O) des Walzengewichts (88) weiter nach innen als das innere Ende (83e) der äußeren Platte (83A) positioniert ist, wenn das Walzengewicht (88) am weitesten nach innen in Bezug auf die radiale Richtung der Eingangswelle (38) positioniert ist.

5. Fliehkraftkupplung nach einem der Ansprüche 1 bis 4, **dadurch gekennzeichnet, dass** das Walzengewicht (88) auf einer Seite der ersten Nockenoberfläche (87) in Bezug auf die axiale Richtung der Eingangswelle (38) positioniert ist, und
die erste Nockenoberfläche (87) in einer derartigen Weise gebildet ist, dass ein Ende (88s) des Walzengewichts (88) auf der einen Seite mehr auf der einen Seite als ein Ende (83r) der äußeren Platte (83A) auf der anderen Seite in Bezug auf die axiale Richtung der Eingangswelle (38) positioniert ist, wenn das Walzengewicht (88) am weitesten nach innen in Bezug auf die radiale Richtung der Eingangswelle (38) positioniert ist.

6. Fliehkraftkupplung nach einem der Ansprüche 1 bis 5, **dadurch gekennzeichnet, dass** die äußere Platte (83A) gebildet ist in einer Form, erhalten durch Abschrägen einer Ecke einer Platte, deren Querschnitt, genommen in der Richtung der Eingangswelle (38), im Wesentlichen rechteckig ist, und die zweite Nockenoberfläche (80) der abgeschrägte Teil ist.

7. Fahrzeug vom Spreizsitz- Typ, aufweisend die Fliehkraftkupplung nach einem der Ansprüche 1 bis 6.

## Revendications

1. Embrayage centrifuge à mettre en prise et hors prise lorsqu'un véhicule de type à chevaucher démarre et arrête son trajet, comprenant :
un carter d'embrayage (81) qui tourne en même temps qu'un arbre d'entrée (38) qui tourne lorsqu'il lui est appliqué un couple provenant d'une source d'entraînement,
un bossage d'embrayage (82) disposé à l'intérieur du carter d'embrayage (81) par rapport à une direction radiale de l'arbre d'entrée (38),
un disque externe (83A) monté sur le carter d'embrayage (81) de façon à pouvoir glisser par rapport à la direction axiale de l'arbre d'entrée (38),
un disque interne (86) monté sur le bossage d'embrayage (82) de façon à pouvoir glisser par rapport à la direction axiale de l'arbre d'entrée (38) et faisant face au disque externe (83A), et
une masselotte à galet (88) ménagée entre le carter d'embrayage (81) et le disque externe (83A), une première surface de came (87) étant formée sur le carter d'embrayage (81), la première surface de came (87) étant configurée pour guider la masselotte à galet (88) dans une direction telle que le disque externe (83A) et le disque interne (86) soient ajustés à force l'un avec l'autre lorsque la masselotte à galet (88) se voit appliquer une force centrifuge et se déplace vers l'extérieur dans la direction radiale de l'arbre d'entrée (38), **caractérisé par**
une courbe caractéristique indiquée dans un graphique de corrélation dont l'axe horizontal représente la position du centre (0) de la masselotte à galet (88) relativement à l'axe de l'arbre d'entrée (38) par rapport à la direction radiale de l'arbre d'entrée (38), et dont l'axe vertical représente la vitesse du moteur thermique comme étant une pièce se déplaçant vers le haut vers la droite qui s'étend progressivement au travers d'un point pour lequel la position du centre (0) de la masselotte à galet (88) est égale à la position de l'extrémité interne (83e) du disque externe (83A).

2. Embrayage centrifuge selon la revendication 1, **caractérisé par** une seconde surface de came (80) formée au moins au niveau de l'extrémité interne (83e) du disque externe (83A) dans la direction radiale, la seconde surface de came (80) étant configurée pour guider la masselotte à galet (88) vers l'extérieur dans la direction radiale de l'arbre d'entrée (38) et vers la première surface de came (87) par rapport à la direction axiale de l'arbre d'entrée (38) lorsque la masselotte a came (88) se voit appliquer une force centrifuge et se déplace.

3. Embrayage centrifuge selon la revendication 2, **caractérisé en ce que** la seconde surface de came (80) est formée d'une surface incurvée convexe.

4. Embrayage centrifuge selon l'une quelconque des revendications 1 à 3, **caractérisé en ce que** la première surface de came (87) est formée de manière telle que le centre (O) de la masselotte à galet (88) est positionné plus à l'intérieur que l'extrémité interne (83e) du disque externe (83A) lorsque la masselotte à galet (88) est positionnée à la position la plus intérieure par rapport à la direction axiale de l'arbre d'entrée (38).

5. Embrayage centrifuge selon l'une quelconque des revendications 1 à 4, **caractérisé en ce que** la masselotte à galet (88) est positionnée sur un côté de la première surface de came (87) par rapport à la direction axiale de l'arbre d'entrée (38), et
la première surface de came (87) est formée de manière telle que l'extrémité (88s) de la masselotte à galet (88) sur le premier côté est positionnée plus sur le premier côté que l'extrémité (83r) du disque externe (83A) sur l'autre coté par rapport à la direction axiale de l'arbre d'entrée (38) lorsque la masselotte à galet (88) est placée à la position la plus intérieure par rapport à la direction radiale de l'arbre d'entrée (38).

6. Embrayage centrifuge selon l'une quelconque des revendications 1 à 5, **caractérisé en ce que** le disque externe (83A) est façonné en une forme obtenue en chanfreinant un coin du disque dont la section transversale prise dans la direction radiale de l'arbre d'entrée (38) est en général rectangulaire, et la seconde surface de came (80) est la pièce chanfreinée.

7. Véhicule de type à chevaucher comprenant l'embrayage centrifuge conforme à l'une quelconque des revendications 1 à 6.
